# FASCICULE DE BREVET EUROPEEN

(11) **EP 3 401 251 B1**
(45) Date de publication et mention de la délivrance du brevet: **12.11.2025**
(21) Numéro de dépôt: 18000364.2
(22) Date de dépôt: 16.04.2018
(51) Int. Cl.: B65G 69/00

(54) **DISPOSITIF D'IMMOBILISATION DE VÉHICULE**
WEGFAHRSPERRE FÜR EIN FAHRZEUG
VEHICLE IMMOBILISATION DEVICE

(30) Priorité: 12.05.2017 FR 1700514
(43) Date de publication de la demande: 14.11.2018
(73) Titulaire: EXPRESSO France SAS, 67319 Wasselonne (FR)
(72) Inventeur: Michel, Roere, 67720 Weyersheim (FR)
(74) Mandataire: Munier, Laurent

(56) Documents cités:
- EP-A1- 1 594 775
- WO-A1-2016/138131
- US-A- 5 762 460
- US-A1- 2010 260 586

## Description

La présente invention se rapporte à l'immobilisation de véhicules routiers et structures correspondantes de transport de marchandises pendant les phases de transbordement de ladite structure à un quai.

Le document EP 2 236 445 (au nom de la demanderesse), qui divulgue un dispositif d'immobilisation selon le préambule de la revendication 1, enseigne un dispositif d'immobilisation de véhicule routier et structures correspondantes de transport de marchandises pendant les phases de transbordement de ladite structure à quai, par action sur le pneu d'une de ses roues, une poutre étant un moyen de guidage visuel dudit véhicule reculant vers le quai, le dispositif d'immobilisation étant un chariot mobile le long dudit moyen de guidage, un moyen de déplacement dudit chariot le long du moyen de guidage, un moyen de verrouillage dudit chariot sur ladite poutre de guidage, un moyen de détection du pneu, et une pièce de calage dont une extrémité est fixée sur le châssis du dispositif, un mécanisme de positionnement de ladite pièce de calage, le dispositif comportant un moyen de traitement en vue du réglage de la position de ladite pièce de calage.

Ce dispositif d'immobilisation est très avantageux pour la sécurité, en évitant de potentiels accidents lors du transbordement. En effet, si le camion se décale et s'éloigne du quai, un espace s'ouvre entre le quai et le plateau du camion, où le personnel, les chariots élévateurs et la marchandise peuvent tomber. De même, une remorque peut basculer. Ledit dispositif immobilise les véhicules routiers, camions, tracteurs, fourgons, etc. pour prévenir cette cause d'accidents.

Néanmoins, ce dispositif connu présente des limitations, certaines structures présentant des empattements très larges, plus larges que l'écartement des roues de camion, notamment les caisses mobiles, plateaux ou conteneurs. De même, dans certains cas, le dispositif doit être placé en retrait, pour faciliter l'accostage des véhicules.

Le dispositif d'immobilisation connu coulisse longitudinalement sur le rail de guidage fixe. Dans le cas où un véhicule à empattement plus large tente d'accoster, il trouvera sur son chemin ledit dispositif d'immobilisation. Les opérations de transbordement ne pourront plus se faire.

L'immobilisation ou l'arrêt du camion ne sont plus possibles. La prévention des accidents décrits ci-dessus n'est plus assurée.

**L'état de la technique présenté par le document** US 5 762 460 A **présente deux rehausses pour véhicule utilitaire.**

**Ce document décrit un moyen de mise à niveau de camions utilitaires légers ou de camions surbaissés, ces rehausses sont déplaçables latéralement ou basculantes pour permettre le passage des véhicules de transport routiers classiques et servent en même temps à les guider.**

**Cesdites rehausses sont également équipées de logements sur la surface de roulement pour permettre la pose d'une cale manuelle.**

**Cette réalisation nécessite une intervention humaine dans la zone d'accostage, spécialement pour la pose de la cale à positionner dans les logements.**

**La présente invention a pour objet de s'appliquer à tous types de véhicules afin que les véhicules hors gabarit puissent en profiter. Cela inclut à l'évidence les camions super-lourds qui passent par-dessus les cales manuelles envisagé par le document** US 5 762 460 A**. C'est pourquoi l'invention guide les appareils de blocage équipés notamment avec une barre métallique sur le pneu.**

**Ce document de l'état de la technique qui ne présente pas d'appareil ou moyen qui combine deux déplacements longitudinal et latéral d'un dispositif de blocage.**

**Ce document ne présente pas non plus de zone rectangulaire de travail pour le dispositif de blocage.**

**Un système pour positionner un véhicule de transport routier est connu par le document** WO 2016/138131 A1**.**

**Dans ce système, les parties de véhicule sont prisonnières d'un système de guidage adaptable à l'écartement des roues, afin de positionner exactement ledit véhicule à l'axe du moyen de chargement, cela pour faciliter le chargement de caisse de transport maritime par exemple, mais il n'y a pas de blocage.**

**Par contraste, l'invention a pour objet d'obtenir un déplacement dans toutes les directions horizontales, de façon à ce que le moyen de blocage ou de verrouillage atteigne un véhicule libre. Ce blocage a pour but d'éviter les accidents.**

**Ce document connu ne présente pas non plus de zone rectangulaire de travail pour le dispositif de blocage.**

**Le document** US 2010/260586 A1 **décrit une cale manuelle suspendue à un équilibreur fixé sur un chariot coulissant sur un rail de potence orientable, ou coulissante, ladite cale étant ensuite manuellement verrouillée sur une des encoches d'un guide fixé au sol.**

**Le document** US 2010/260586 A1 **décrit une cale manuelle suspendue à un équilibreur fixé sur un chariot coulissant sur un rail de potence orientable, ou coulissante, ladite cale étant ensuite manuellement verrouillée sur une des encoches d'un guide fixé au sol.**

**Si la potence permet le déplacement dans tous les sens, le guide fixe ne permet pas de se rapprocher de l'invention et l'intervention humaine est indispensable, d'où les risques d'accident que l'invention a pour but d'éviter.**

**Ce document ne présente pas non plus de zone rectangulaire de travail pour le dispositif de blocage. Avec un rail et une potence, la zone de travail serait un ovale.**

**Il sera noté qu'en raison de véhicules très lourds, le moyen de blocage nécessite un ancrage (réversible) au sol et le guide fixé au sol impose une zone de travail longitudinale pour le dispositif bloqueur ce qui revient à la bande obtenue par** EP 2 236 445**.**

**Ici encore l'état de la technique ne fonctionne pas pour les véhicules hors gabarit.**

**Par le document** EP 1 594 775 A1 **l'état de la technique connait un bras pivotant manuellement et extensible pour le blocage de véhicules de transport routier.**

**Bien que s'approchant de l'invention, ici encore c'est un produit à mise en place manuelle, nécessitant une présence humaine dans la zone d'accostage.**

**Ce document ne présente pas non plus de zone rectangulaire de travail pour le chariot de blocage. Avec un bras pivotant, la zone de travail est un rond.**

Pour résoudre ces problèmes techniques l'invention propose un dispositif d'immobilisation selon la revendication 1. Pour permettre la mise en place du dispositif d'immobilisation entraînant l'interdiction d'accès du véhicule, ladite poutre de guidage du chariot est décalée de sa position initiale et le dispositif d'immobilisation est munie d'un moyen de déplacement latéral perpendiculaire à sa direction longitudinale, permettant le déplacement horizontal du chariot, ce qui rend accessible les différentes directions horizontales. Ce dispositif d'immobilisation routier prendra le nom dit Stop Trucks (marque déposée) à déplacement latéral.

Selon d'autres caractéristiques :
- la poutre de guidage longitudinal de dispositif d'immobilisation de véhicule, laquelle poutre est décalée par rapport au quai de manière à former un espace entre le quai et la poutre, pour permettre à ladite poutre de guidage à déplacement latéral de s'insérer entre les béquilles d'une caisse mobile et/ou pour reprendre une position propice à une bonne immobilisation, si le véhicule porteur ne se désolidarise pas de celle-ci ; dans ce cas, le dispositif de sécurisation des caisses mobiles n'est pas utilisé ;
- la poutre de guidage de dispositif d'immobilisation de véhicule, laquelle est actionnée depuis un tableau de commande installé au niveau du quai, à l'intérieur ou à l'extérieur d'un bâtiment ou posé sur un poteau ;
- à chaque extrémité de la poutre de guidage de dispositif d'immobilisation de véhicule, est prévu un plot, un capot recouvrant ladite poutre et le dispositif d'immobilisation, la poutre présentant à chacune de ses extrémités une plaque verticale qui glisse latéralement en étant guidée sur les plots d'extrémité correspondants.

L'invention propose également une installation de transbordement selon la revendication 4.

La présente invention propose également un procédé selon la revendication 7.

D'autres avantages de l'invention apparaîtront à la lecture de la description des dessins, donnée à titre non limitatif et dans laquelle :
- la fig. 1 est une vue en élévation d'un moyen de guidage comprenant deux dispositifs de calage selon l'invention et deux dispositifs de sécurisation de caisse, utilisés dans un système de chargement et déchargement de véhicules, ainsi qu'une caisse mobile installée sur béquilles ;
- la fig. 2 est une vue de dessus représentant le quai, deux emplacements pour véhicules, une caisse mobile placée à quai, avec coupe partielle 20, et deux dispositifs suivant l'invention, dont celui situé à côté de la caisse est déplacé latéralement vers la caisse mobile ;

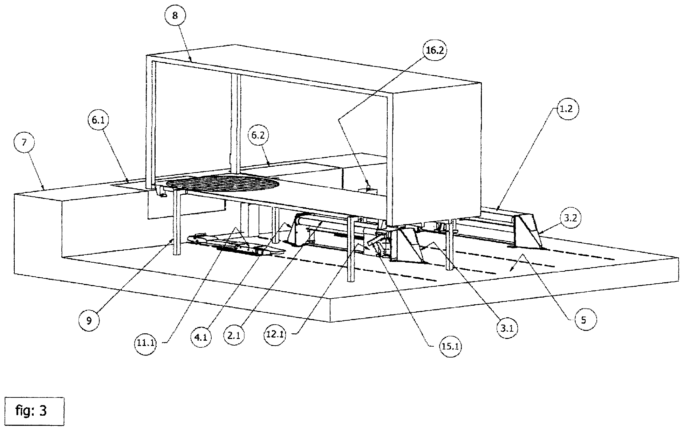

- la fig. 3 représente en élévation une vue de trois quarts avant gauche des dispositifs des figures 1 et 2, dans lesquels le moyen de blocage de roue de véhicule est en position de protection du dispositif de sécurisation des caisses mobiles ;

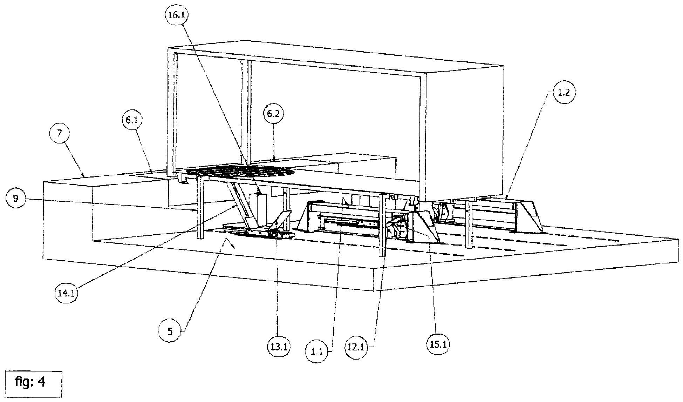

- la fig. 4 est une représentation de trois quarts avant gauche, représentant le dispositif de sécurisation de caisse en position travail ;

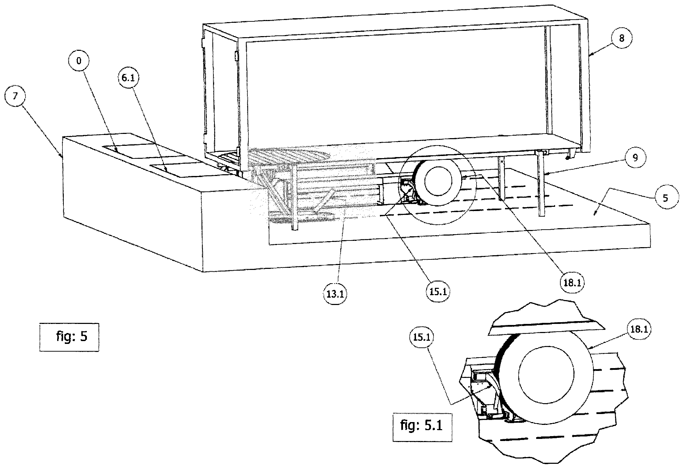

- les fig. 5 et 5.1 sont une représentation de trois quarts arrière des dispositifs des figures précédentes, dans lesquels une roue représentant un véhicule est bloquée avant d'atteindre le dispositif de sécurisation de caisse ;

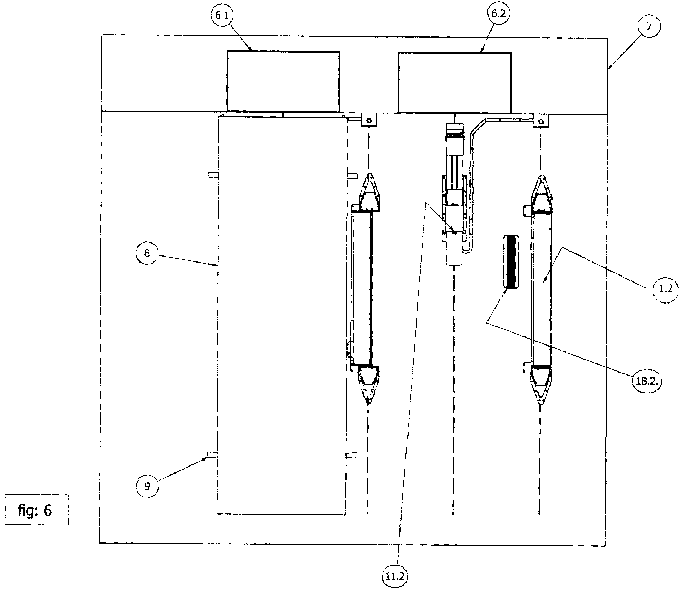

- la fig. 6 représente une vue de dessus des dispositifs d'accostage, où un camion porteur ou semi-remorque, représenté par une roue, est arrivé sur la deuxième place ;
- les fig. 7 et 7.1 représentent une vue en élévation des dispositifs d'accostage des revendications précédentes ; le camion de la deuxième place étant loin du rail de guidage, le dispositif selon l'invention s'est rapproché par mouvement latéral et le moyen de blocage monté sur le chariot est en position de travail ;
- la fig. 8 représente en élévation l'invention, présentant deux plots d'extrémité montés sur des plaques fixées au sol, reliés par une poutre servant de rail de guidage d'un chariot support du moyen de blocage de roue protégé par un capot ;
- la fig. 9 représente en éclaté la poutre de la fig. 8 ;
- la fig. 10 représente en élévation la poutre avec ses plaques de fixation, son capot, le tube et le profil en U de glissement ;
- la fig. 11 représente le chariot selon l'invention, avec le moyen de blocage de roue effaçable en position haute ;
- la fig. 12 représente en élévation un plot arrière selon l'invention, avec la plaque de fixation de la poutre coulissante en position rentrée ;
- la fig. 13 représente le plot de la fig. 12, la plaque de fixation de la poutre coulissante en position sortie ;
- la fig. 14 représente en élévation un plot avant selon l'invention, avec l'autre plaque de fixation de la poutre coulissante en position rentrée ;
- la fig. 15 représente le plot de la fig. 14, l'autre plaque de fixation de la poutre coulissante en position sortie ;
- la fig. 16 est une vue arrachée d'un plot de poutre coulissante selon l'invention, présentant le système d'actionnement du déplacement de la poutre.

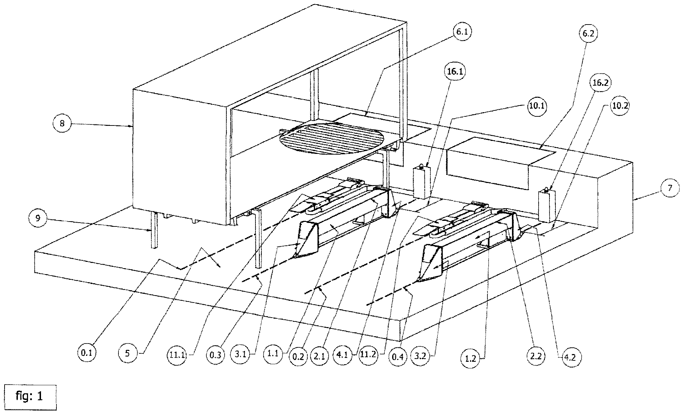

Le dispositif **d'immobilisation** 1, 1.1 ou 1.2 selon l'invention, et respectivement un dispositif de sécurisation de caisses 11, 11.1 ou 11.2, représentés figures 1, à 7, sont disposés dans une installation 5 de mise en œuvre d'une procédure de chargement et déchargement de moyen de transport routier de marchandises tel qu'un camion, un plateau, une caisse mobile ou autre.

Chaque dispositif **d'immobilisation** 1, 1.1, 1.2 selon l'invention est composé d'une poutre coulissante 2, 2.1, 2.2, d'un plot avant 3, 3.1, 3.2, d'un plot arrière 4, 4.1, 4.2, d'un chariot de déplacement 12, 12.1, 12.2 comprenant les moyens hydrauliques pour assurer ses déplacements longitudinaux et les mouvements verticaux du moyen de blocage 15, 15.1, 15.2 et d'une armoire technique 16, 16.1, 16.2, regroupant les moyens hydrauliques aux déplacements latéraux ; cette armoire technique pouvant être commune au dispositif de sécurisation des caisses 11, 11.1, 11.2.

Chaque dispositif **d'immobilisation** 1, 1.1, 1.2 est posé perpendiculairement au quai 5 sur un axe 0, 0.3, 0.4 et parallèlement aux axes 0, 0.1, 0.2, décalé d'une distance permettant le passage des caisses mobiles. Chaque dispositif **d'immobilisation** 1, 1.1, 1.2 est posé en laissant un espace libre 10, 10.1 ou 10.2, pour permettre à ladite invention de s'insérer entre les béquilles d'une caisse mobile et permettre le déplacement latéral de la poutre coulissante 2, 2.1, 2.2.

Le système de déplacement latéral visible fig. 17 est alimenté par un système hydraulique situé dans les armoires techniques 16, 16.1, 16.2 ; ces armoires techniques pouvant servir à faire également fonctionner les dispositifs de sécurisation des caisses mobiles 11, 11.1, 11.2.

Toute action d'immobilisation de véhicules routiers doit être précédée d'un déplacement latéral de la poutre coulissante 2, 2.1, 2.2.

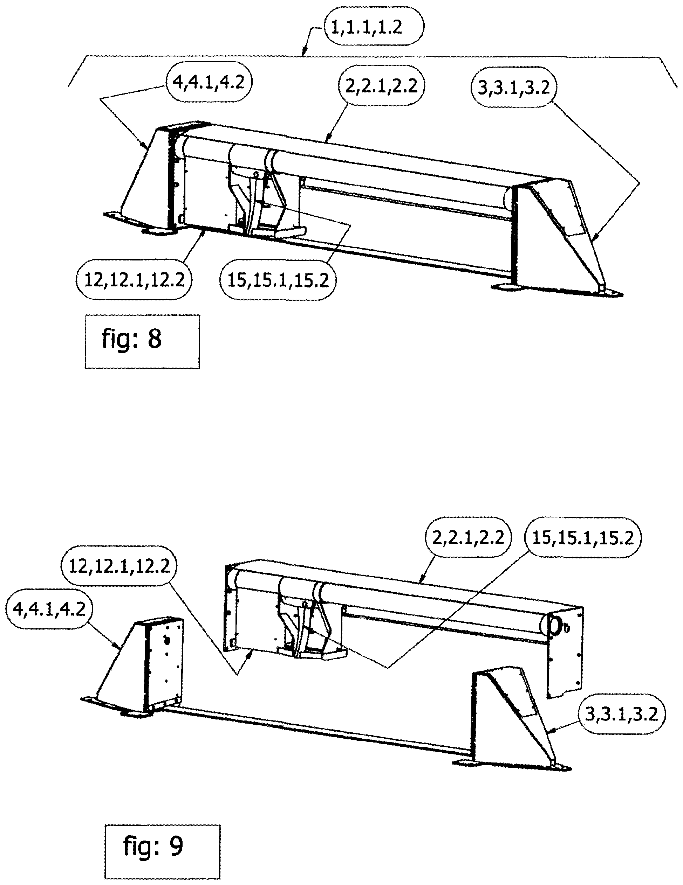

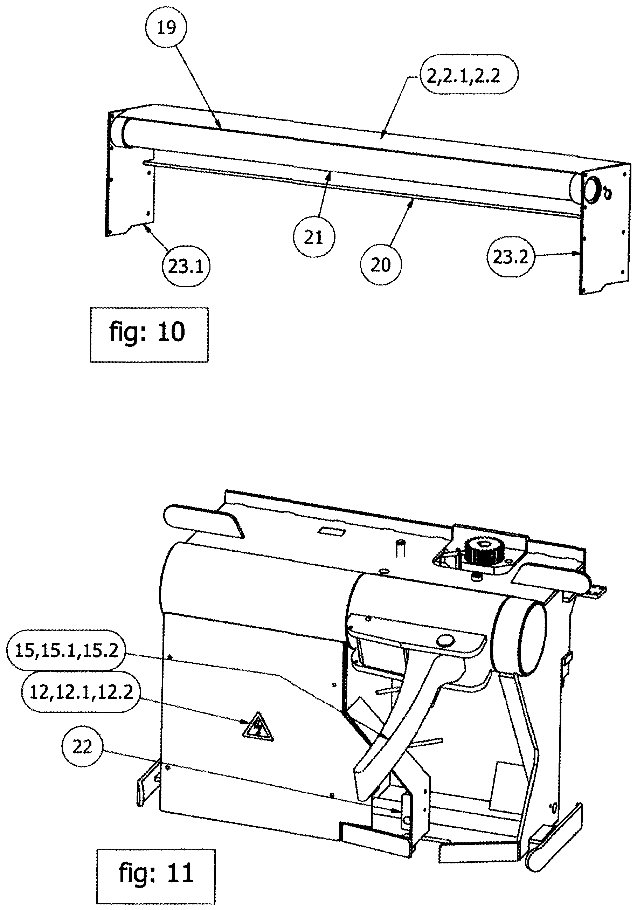

Un système à fonctionnement hydraulique embarqué sur le chariot 12, 12.1, 12.2 permet de déplacer le dispositif d'immobilisation 15, 15.1, 15.2, représenté fig. 11. Le chariot court le long de la poutre coulissante 2, 2.1, 2.2 représentée fig. 8, 9 et 10, en coulissant sur le tube 21 et sur le profil en U 20. Un système intelligent de détection 22, comprenant une cellule, permet de détecter le premier pneu 18 posé au sol. Un système de mesure relève alors le diamètre extérieur du pneu et l'enregistre.

Le dispositif comprend une pièce de calage 15 qui, en s'appuyant sur le pneu d'une roue 18, bloque et immobilise ainsi le véhicule. La pièce de calage 15 présente une forme incurvée. Cette forme présente d'une part l'avantage de permettre un contact optimal sur le pneu 18, lequel contact s'établit sur une largeur significative. D'autre part, elle donne une plus grande rigidité à la pièce et permet donc d'en diminuer l'épaisseur pour lui permettre de se glisser entre le garde-boue et le pneu sans dommage pour celui-ci.

Un système de traitement de données déduit de ce diamètre la trajectoire à suivre par la pièce de calage 15 pour suivre au plus près la forme du pneu 18. Cette position doit s'adapter à chaque diamètre de pneu pour optimiser le calage mais aussi le décalage. En effet, si la pièce de calage 18 appuie trop haut ou trop bas, le calage n'est pas optimal. En particulier, si le calage s'effectue plus haut que l'axe de la roue, le décalage est problématique si l'escamotage de la pièce de calage 15 doit s'effectuer par rotation de ladite pièce. En effet, ladite pièce bute alors sur le pneu et ne peut pas s'escamoter.

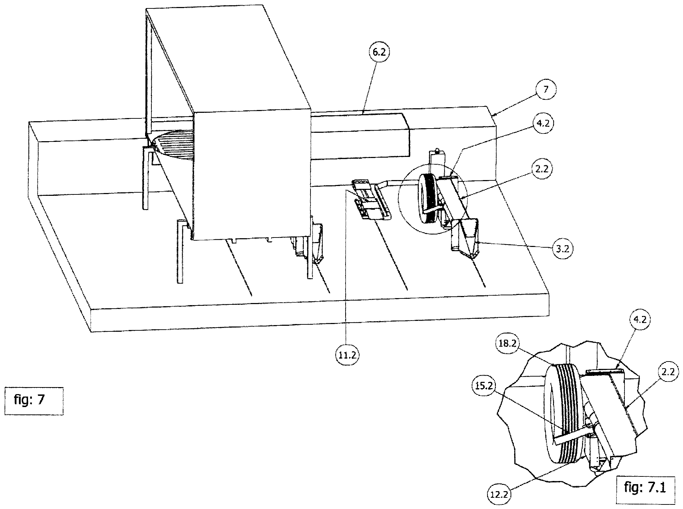

Une fois que la pièce de calage 15 est dans une position haute déterminée par le système de traitement de données actionnant la partie pivotante, le chariot recule pour rapprocher la pièce de calage 15 du pneu 18, jusqu'au contact franc de ladite pièce avec le pneu, comme le présente la fig. 7.1.

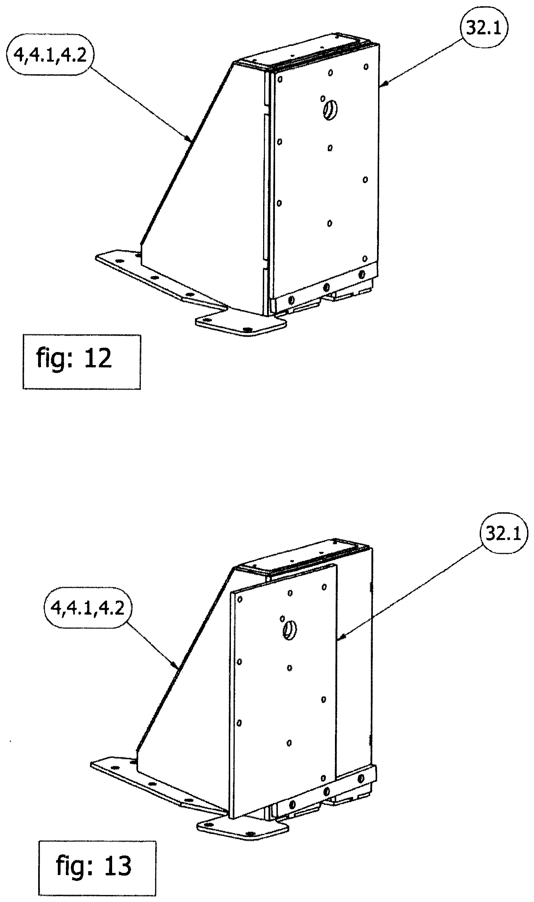

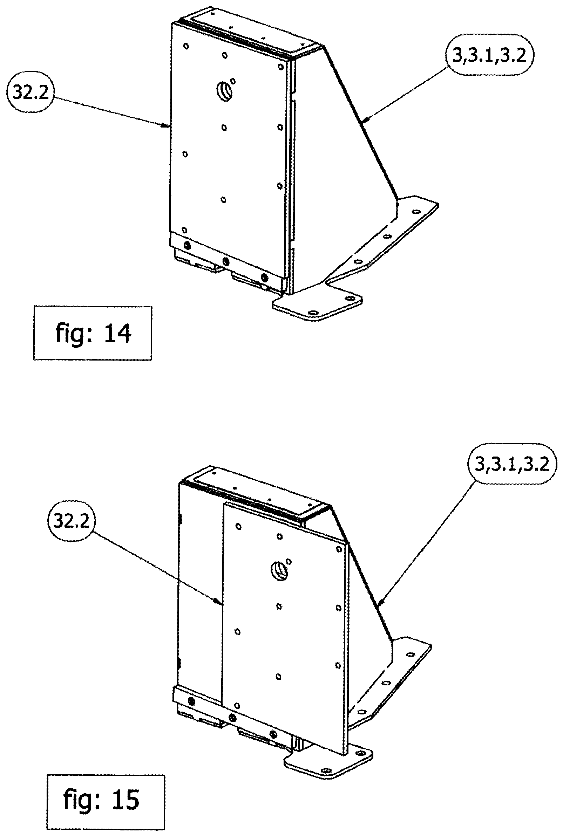

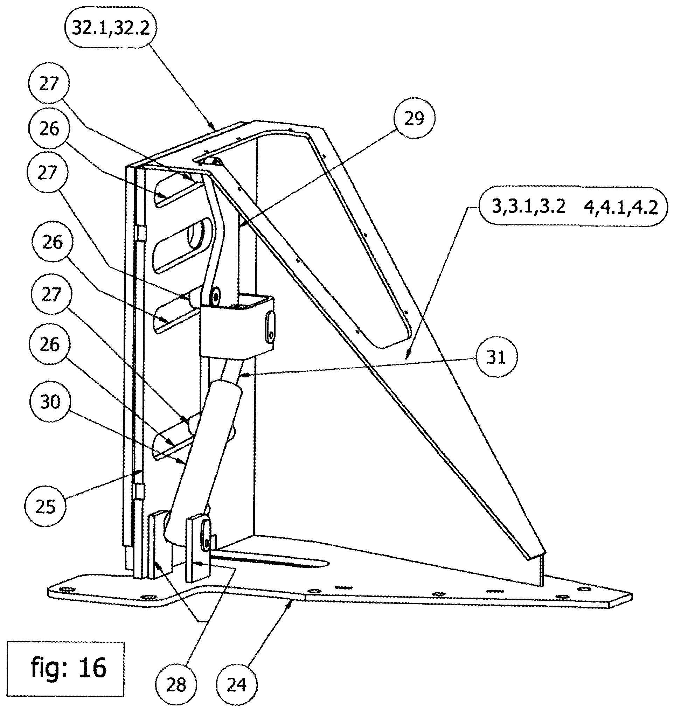

Le déplacement latéral est illustré par les plots arrière représentes fig. 13 et 14 et les plots avant représentés fig. 15 et 16.

Les plots 3, 3.1, 3.2 et 4, 4.1, 4.2 comprennent chacun une plaque inférieure 25. Cette plaque 25 forme semelle qui dépasse du plot pour faire reposer en position sortie les plaques 23.1 et 23.2, fig.10 et présente des trous permettant le passage des vis et chevilles de fixation au sol. Sur cette plaque est monté un ensemble de tôles soudées en forme d'avaloir, fig. 17. La face inférieure 25 présente au moins deux lumières de guidage 26 d'une plaque verticale 32.1 ou 32.2 montée coulissante latéralement. La poutre 1 est fixée respectivement aux plaques coulissantes 32.1 et 32.2 par les plaques 23.1 et 23.2. La fig. 17 décrit le moyen déclenchant le déplacement latéral de la poutre coulissante. Dans cette variante d'exécution, un vérin 30 est monté pivotant sur des chapes 28. La sortie de la tige 31 du vérin 30 déclenche le mouvement d'une pièce de jonction 29 équipée de galets de translation 27 coulissant dans des lumières 26 et entraînant la poutre coulissante.

La présente invention propose également un procédé selon la revendication 7 de protection du dispositif de sécurisation de caisse mobile 11, 11.1, 11.2 lorsque les caisses sont désolidarisées des véhicules porteurs.

Après la sortie latérale de la poutre coulissante 2, 2.1, 2.2, le chariot 12, 12.1, 12.2 coulisse sur ladite poutre en bout de course, la butée escamotable 15 est relevée jusqu' à sa position haute maximale. Ledit chariot est alors bloqué.

La mise en place du système de sécurisation 11, 11.1, 11.2 peut alors se faire.

Ledit système sera alors protégé, la mise en place ultérieure de la butée escamotable 15 empêchant l'arrivée prématurée d'un véhicule voulant reprendre la caisse avant la fin des opérations de transbordement.

La présente invention ne reprendra sa place initiale qu'une fois que le système de sécurisation des caisses 11, 11.1, 11.2 sera replié, autorisant ainsi l'enlèvement de la caisse 8.

Bien que l'invention ait été décrite en liaison avec des structures particulières, on peut y apporter de nombreuses variantes, à condition qu'elles soient dans l'étendue de la protection des revendications, par exemple : le vérin 30 peut être remplacé par un moteur; des places supplémentaires peuvent être prévues dans l'installation de transbordement.

### Signes de référence

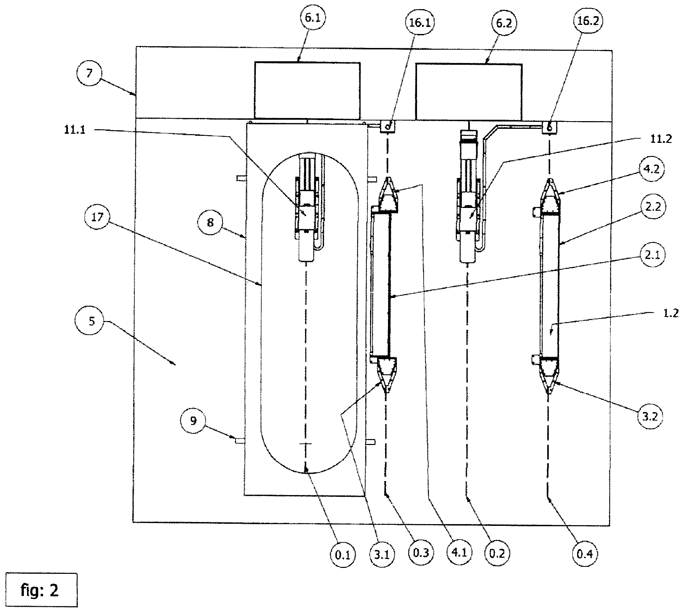

0. Axes
0.1 Axe de l'emplacement de chargement 6.1
0.2 Axe de l'emplacement de chargement 6.2
0.3 Axe du dispositif d'immobilisation de véhicule 3.1
0.4 Axe du dispositif d'immobilisation de véhicule 3.2
1. Dispositifs d'immobilisation du véhicule (et son chariot)
1.1 Dispositif d'immobilisation du véhicule
1.2 Dispositif d'immobilisation du véhicule
2. Poutres coulissantes
2.1 Poutre coulissante
2.2 Poutre coulissante
3. Moyens de support ou plots (avant)
3.1 Moyen de support/plot
3.2 Moyen de support/plot
4. Moyens de support ou plots (arrière)
4.1 Moyen de support/plot
4.2 Moyen de support/plot
5. Installation/système (l'ensemble) de chargement/déchargement
6. Emplacement de chargement
6.1 Emplacement de chargement
6.2 Emplacement de chargement
7. Quai
8. Moyen de transport (caisse)
9. Béquilles du moyen de transport (caisse)
10. Espaces libres
10.1 Espace libre
10.2 Espace libre
11. Dispositifs de sécurisation des caisses (dispositifs de béquillage)
11.1 Dispositif de sécurisation des caisses
11.2 Dispositif de sécurisation des caisses
12. Chariots
12.1 Chariot
12.2 Chariot
13. Bavettes de sécurité
13.1 Bavette de sécurité
13.2 Bavette de sécurité
14. Béquilles escamotables ou amovibles
14.1 Béquille escamotable ou amovible
14.2 Béquille escamotable ou amovible
15. Butées escamotables (cale)
15.1 Butée escamotable
15.2 Butée escamotable
16. Armoires techniques
16.1 Armoire technique
16.2 Armoire technique
17. Coupe partielle fig. 2
18. Roues
18.1 Roue
18.2 Roue
19. Capot de protection poutres coulissantes
20. Profil en U, poutres coulissantes
21. Tube de coulissement des poutres coulissantes
22. Cellule de détection pneu
23. Plaques de fixation poutre coulissante sur plots
23.1 Plaque de fixation sur plot arrière
23.2 Plaque de fixation sur plot avant
24. Plaque de base des plots
25. Face inférieure des plots
26. Lumières de coulissement des galets 27
27. Galets de roulement
28. Chapes de rotation vérin
29. Pièce de liaison galets
30. Corps de vérin de déplacement latéral
31. Tige du vérin 30
32. Plaques coulissantes des plots (fixation des plaques 23.1 et 23.2)
32.1 Plaque coulissante plot arrière
32.2 Plaque coulissante plot avant

## Revendications

1. Un dispositif d'immobilisation de véhicule routier **(1, 1.1, 1.2)** et structures correspondantes de transport de marchandises pendant les phases de transbordement de ladite structure à un emplacement de chargement (6), par action sur le pneu d'une de ses roues (18), comprenant une poutre de guidage, la poutre ( **2, 2.1, 2.2)** étant un moyen de guidage visuel dudit véhicule reculant vers le quai (7), un chariot mobile (12) le long dudit moyen de guidage, un moyen de déplacement dudit chariot (12) le long du moyen de guidage, un moyen de verrouillage dudit chariot sur ladite poutre de guidage, un moyen de détection (22) du pneu et une pièce de calage (15), **caractérisé en ce que** le dispositif d'immobilisation comprend un moyen de déplacement latéral et **en ce que** ladite poutre de guidage du chariot est mobile à l'aide dudit moyen de déplacement latéral sensiblement perpendiculaire à sa direction longitudinale, permettant le déplacement horizontal du chariot ce qui rend accessible les différentes directions horizontales.

2. Un dispositif d'immobilisation de véhicule **routier (1, 1.1, 1.2)** selon la revendication précédente, dans lequel est prévu à chaque extrémité de la poutre (2, 2.1, 2.2) un plot avec un capot (3, 4), un troisième capot recouvrant la partie centrale de la poutre et le dispositif d'immobilisation, la partie centrale présentant à chacune de ses extrémités une plaque verticale qui se fixe sur une plaque coulissante de chaque plot.

3. Un dispositif d'immobilisation de véhicule **routier (1, 1.1, 1.2)** selon l'une des revendications précédentes dans lequel la poutre (2, 2.1, 2.2) est décalée par rapport au quai **(7)** de manière à former un espace entre le quai (7) et la poutre, permettant ensuite le déplacement latéral de la poutre coulissante.

4. Installation de transbordement de marchandises de véhicules routiers, comprenant au moins un quai (7) de chargement/déchargement et plusieurs dispositifs selon l'une des revendications précédentes, les poutres (2, 2.1, 2.2) se déplaçant latéralement selon commande.

5. Installation selon la revendication précédente, dans laquelle un tableau de commande d'actionnement du déplacement de la poutre (2, 2.1, 2.2) installé au niveau du quai (7), à l'intérieur ou à l'extérieur d'un bâtiment ou encore posé sur un poteau.

6. Installation selon la revendication 4 ou 5, qui comprend un quai (7) avec plusieurs emplacements de chargement, et un dispositif de sécurisation d'une structure mobile à béquilles de réception de chargement telle qu'une caisse (8), un plateau ou un conteneur de manutention.

7. Procédé de protection de vérin et béquille amovibles de sécurisation de caisse mobile à à l'aide d'une installation selon la revendication 6, comprenant les étapes suivantes :
- à l'arrivée de la caisse (8), la poutre (2) est au repos ;
- avant le béquillage de la caisse mobile, la poutre coulisse latéralement vers l'axe du quai ou de la caisse ;
- la poutre ayant coulissé latéralement jusqu'à sa position travail, le chariot (12) se déplace longitudinalement vers sa position travail maximale ;
- le dispositif d'immobilisation de roue est équipé d'une pièce rabattable qui monte ou descend ; cette pièce arrêtant les roues de véhicule en position haute, ladite pièce se met en position haute maximale, interdisant l'accès véhicule ;
- la béquille amovible (14) est mise en place et verrouille la caisse pour sécuriser le chargement, le dispositif comprenant la béquille amovible étant protégé ;
- pour permettre au camion de reprendre la caisse, ladite pièce est rabattue, le chariot coulisse longitudinalement jusqu'à sa position repos et la poutre coulisse longitudinalement jusqu'à la position repos.

8. Procédé selon la revendication précédente d'immobilisation de véhicule, en variante un véhicule sans caisse mobile vient au contact du quai (7), le véhicule routier étant éloigné de la poutre de guidage (2, 2.1, 2.2), les étapes précédentes par le déplacement latéral de la poutre entraînant le chariot (12) permet à **la pièce rabattable** de venir jusqu'à la roue, bloquant le véhicule routier ; interdisant le déplacement véhicule.

9. Procédé selon l'une des revendications 7 ou 8, dans lequel le déplacement latéral de la poutre (2, 2.1, 2.2) est actionné depuis un tableau de commande installé au niveau du quai (7), à l'intérieur ou à l'extérieur d'un bâtiment.

10. Procédé selon l'une des revendications 7 ou 8, dans lequel le déplacement latéral de la poutre (2, 2.1, 2.2) est actionné depuis un tableau de commande posé sur un poteau.

## Patentansprüche

1. Eine Feststellenvorrichtung zum Feststellen eines Straßenfahrzeugs (1, 1.1, 1.2) und zugehöriger Strukturen zum Transport von Gütern während der Lastübertragungsphasen dieser Struktur u einem Lade Ort (6) durch Einwirkung auf den Reifen eines seiner Räder (18), bestehend aus einem Führungsbalken, wobei der Balken (2, 2.1, 2.2) eine visuelle Führungsmittel des Fahrzeugs beim Rückwärtsfahren zum Lade Dock (7) darstellt, einem Wagen (12), der sich entlang der Führungsmittel bewegt, einer Einrichtung zum Bewegen des Wagens (12) entlang der Führungsmittel, einer Einrichtung zum Feststellen des Wagens auf dem Führungsbalken, einer Einrichtung zum Erkennen (22) des Reifens und einem Blockierteil (15), die Feststellvorrichtung ist **dadurch gekennzeichnet, dass** sie eine seitliche Bewegungseinrichtung umfasst und dass der Führungsbalken des Wagens durch diese seitliche Bewegungseinrichtung im Wesentlichen senkrecht zu seiner Längsrichtung beweglich ist, wodurch die horizontale Bewegung des Wagens ermöglicht und die verschiedenen horizontalen Richtungen zugänglich sind.

2. Eine Feststellenvorrichtung (1, 1.1, 1.2) für Straßenfahrzeuge gemäß dem vorhergehenden Anspruch, wobei sich an jedem Ende des Balkens (2, 2.1, 2.2) ein Block mit einer Abdeckung (3, 4) befindet und sich über dem Mittelteil des Balkens und der Feststellenvorrichtung eine dritte Abdeckung befindet, wobei der Mittelteil an jedem seiner Enden eine vertikale Platte aufweist, die an einer Gleitplatte an jedem Block befestigt ist.

3. Eine Feststellenvorrichtung (1, 1.1, 1.2) für Straßenfahrzeuge nach einem der vorhergehenden Ansprüche, wobei der Balken (2, 2.1, 2.2) in einem bestimmten Abstand von dem Lade Dock (7) angeordnet ist, um einen Raum zwischen der Lade Dock (7) und dem Balken zu bilden, wodurch die seitliche Bewegung des Gleitbalkens ermöglicht wird.

4. Anlage zum Umladen von Gütern von Straßenfahrzeugen, die mindestens eine Lade-/Entladedock (7) und mehrere Vorrichtungen nach einem der vorhergehenden Ansprüche umfasst, wobei sich die Balken (2, 2.1, 2.2) je nach Steuerung seitlich bewegen.

5. Anlage nach dem vorhergehenden Anspruch, bei der eine Steuertafel, die die Bewegung des Balkens (2, 2.1, 2.2) betätigt, auf dem Ladedock (7), innerhalb oder außerhalb eines Gebäudes oder auf einem Pfosten angebracht ist.

6. Anlage nach Anspruch 4 oder 5, umfassend ein Ladedock (7) mit mehreren Ladeorten und eine Vorrichtung zum Sichern einer mobilen Struktur zur Aufnahme einer Ladung mit Standfüßen, wie beispielsweise einem Wechselbehälter (8), Pritschenaufbau oder Umschlagcontainer.

7. Verfahren zum Schutz des beweglichen Antriebs und der Stütze zur Sicherung des Wechselbehälters mittels einer Anlage nach Anspruch 6, umfassend die folgenden Schritte:
- Beim Eintreffen des Wechselbehälters (8) befindet sich der Balken (2) in der Ruheposition;
- Bevor der Wechselbehälter abgestützt wird, gleitet der Balken seitlich in Richtung der Achse des Docks oder des Wechselbehälters;
- Nachdem der Balken seitlich in seine Arbeitsposition geschoben wurde, bewegt sich der Schlitten (12) in Längsrichtung in Richtung seiner maximalen Arbeitsposition;
- Die Radfeststellenvorrichtung ist mit einem einziehbaren Teil ausgestattet, das angehoben oder abgesenkt werden kann; dieses Teil blockiert die Fahrzeugräder in der angehobenen Position. Dieses Teil wird in die vollständig angehobene Position gebracht, wodurch der Zugang des Fahrzeugs verhindert wird;
- Die bewegliche Stütze (14) wird in Position gebracht und blockiert den Wechselbehälter zur Sicherung der Ladung, und die Vorrichtung einschließlich der beweglichen Stütze wird geschützt;
- Damit der LKW den Wechselbehälter aufnehmen kann, wird das besagte Teil eingefahren, der Schlitten gleitet in Längsrichtung in seine Ruheposition und der Balken gleitet in Längsrichtung in die Ruheposition.

8. Verfahren nach dem vorhergehenden Anspruch zum Festmachen eines Fahrzeugs, eine Variante, bei der ein Fahrzeug ohne Wechselbehälter mit der Ladedock (7) in Kontakt kommt, wobei sich das Straßenfahrzeug vom Führungsbalken (2, 2.1, 2.2) entfernt befindet, wobei die vorhergehenden Schritte die seitliche Bewegung des Balkens mit dem Wagen (12) beinhalten, wodurch der einziehbare Teil an das Rad herankommt und das Straßenfahrzeug blockiert, wodurch verhindert wird, dass sich das Fahrzeug bewegt.

9. Verfahren nach Anspruch 7 oder 8, wobei die seitliche Bewegung des Balkens (2, 2.1, 2.2) von einem Bedienfeld ausgesteuert wird, das auf dem Dock (7) entweder innerhalb oder außerhalb eines Gebäudes installiert ist.

10. Verfahren nach Anspruch 7 oder 8, wobei die seitliche Bewegung des Balkens (2, 2.1, 2.2) von einem auf einem Pfosten angebrachten Bedienfeld aus betätigt wird.

## Claims

1. A device for immobilising a road vehicle (1, 1.1, 1.2) and related structures for transporting goods during the load transfer phases of said structure in a loading bay (6) by acting on the tyre of one of its wheels (18), comprising a guide beam, the beam (2, 2.1, 2.2) constituting a means of visually guiding said vehicle as it reverses towards the dock (7), a carriage (12) moving along said guiding means, a means of moving said carriage (12) along the guiding means, a means of locking said carriage on said guide beam, a means of detecting (22) the tyre and a chocking part (15), **characterised in that** the immobilising device comprises a means of lateral movement and **in that** said carriage guide beam is movable by said means of lateral movement which is substantially perpendicular to its longitudinal direction, thereby allowing the horizontal movement of the carriage and rendering the different horizontal directions accessible.

2. A road vehicle immobilising device (1, 1.1, 1.2) according to the previous claim, wherein there is a block with a cover (3, 4) at each end of the beam (2, 2.1, 2.2), and a third cover over the central part of the beam and the immobilising device, the central part having at each of its ends a vertical plate which attaches to a sliding plate on each block.

3. A road vehicle immobilising device (1, 1.1, 1.2) according to one of the preceding claims wherein the beam (2, 2.1, 2.2) is placed a certain distance from the dock (7) to form a space between the dock (7) and the beam, thereby allowing the lateral movement of the sliding beam.

4. Installation for transferring goods from road vehicles, comprising at least a loading/unloading dock (7) and several devices according to one of the preceding claims, the beams (2, 2.1, 2.2) moving laterally as commanded.

5. Installation according to the previous claim, in which a control panel actuating the movement of the beam (2, 2.1, 2.2) is installed on the dock (7), inside or outside a building or placed on a post.

6. Installation according to claim 4 or 5, comprising a dock (7) with several loading bays and a device for securing a mobile structure for receiving a load which has leg stands, such as a swap body (8), platform body or handling container.

7. Method of protecting the movable actuator and prop securing the swap body by means of an installation according to claim 6, comprising the following steps:
- when the swap body (8) arrives, the beam (2) is in the resting position;
- before the swap body is propped, the beam slides laterally towards the axis of the dock or swap body;
- the beam having slid laterally into its working position, the carriage (12) moves longitudinally towards its maximum working position;
- the wheel immobilising device is equipped with a retractable part which can be raised or lowered; this part blocking the vehicle wheels in the raised position, said part is placed in the fully raised position, preventing vehicle access;
- the movable prop (14) is put in position and blocks the swap body to secure the load, and the device comprising the movable prop is protected;
- to allow the truck to pick up the swap body, said part is retracted, the carriage slides longitudinally to its resting position and the beam slides longitudinally to the resting position.

8. Method according to the previous claim for immobilising a vehicle, a variant wherein a vehicle without a swap body comes into contact with the dock (7), the road vehicle being away from the guide beam (2, 2.1, 2.2), the previous steps involving the lateral movement of the beam carrying the carriage (12) allowing the retractable part to come up to the wheel and block the road vehicle, preventing the vehicle from moving.

9. Method according to either claim 7 or claim 8, wherein the lateral movement of the beam (2, 2.1, 2.2) is actuated from a control panel installed on the dock (7), either inside or outside a building.

10. Method according to either claim 7 or claim 8, wherein the lateral movement of the beam (2, 2.1, 2.2) is actuated from a control panel placed on a post.
